# EUROPEAN PATENT APPLICATION

(11) **EP 4 813 912 A1**
(43) Date of publication of application: **30.09.2026**
(21) Application number: 24913346.3
(22) Date of filing: 04.11.2024
(51) Int. Cl.: C01B 32/168, C01B 32/174, H01M 4/62, H01M 4/133, H01M 10/052

(54) **SURFACE-MODIFIED CARBON NANOTUBE, AND DISPERSION AND SECONDARY BATTERY, WHICH COMPRISE SAME**

(30) Priority: 28.12.2023 KR 20230195464
(71) Applicant: Dongjin Semichem Co., Ltd., Incheon 22824 (KR)
(72) Inventor: KIM, Hyo Sun, Hwaseong-si, Gyeonggi-do 18635 (KR); KIM, Yoo Seong, Hwaseong-si, Gyeonggi-do 18635 (KR); KIM, Dong Young, Hwaseong-si, Gyeonggi-do 18635 (KR); JEON, Seung Hun, Hwaseong-si, Gyeonggi-do 18635 (KR); HUH, Chul, Hwaseong-si, Gyeonggi-do 18635 (KR)
(74) Representative: Grünecker Patent- und Rechtsanwälte PartG mbB
(86) International application number: PCT/KR2024/017154
(87) International publication number: WO 2025/143509

(57) **Abstract**

The present invention relates to surface-modified carbon nanotubes implementing excellent conductivity and simultaneously having improved dispersibility, and a dispersion and a secondary battery including the same.

## Description

### [Technical Field]

The present invention relates to surface-modified carbon nanotubes, and a dispersion and a secondary battery including the same.

### [Background Art]

A secondary battery has been continuously developed along with steady research since its appearance in the 1990s. Research and development are being carried out together not only for positive electrode/negative electrode active materials, electrolyte, and separator, which are main constituent elements of the secondary battery, but also for auxiliary elements performing a role of complementing and improving characteristics thereof. For the development of a high-capacity secondary battery, it is necessary for a thickness of an electrode to be increased, and it is necessary to form an effective conductive path in order to receive electrons from a current collector.

A conductive material is for improving conductivity of the electrode active material, and conventionally, a dot-type conductive material such as carbon black was mainly used. However, the dot-type conductive material has a problem in that an effect of improving electrical conductivity is not high, so it should be used in an excessive amount to obtain a sufficient effect, and due to this, a content of the electrode active material decreases, whereby a battery capacity is lowered.

To improve such a problem, attempts to apply carbon nanotubes (CNT) having high conductivity as the conductive material are being actively made. Since the carbon nanotubes can implement high conductivity even with a small amount, when using the carbon nanotubes, a content of the conductive material can be significantly reduced compared to a case of using the carbon black, and accordingly, there is an advantage in that an electrical capacity can be increased.

Meanwhile, for the CNT having a high aspect ratio, to disperse them into single tubes due to strong Van der Waals interaction between tubes and tube entanglement, a process of improving dispersibility through chemical surface modification or applying a high-energy shear force had to be performed.

In addition, conventionally, a high-concentration CNT dispersion was manufactured by inducing cutting of the tubes through excessive acid treatment, ultrasonic treatment, dry grinding, or the like, but such methods have a problem in that the CNT is cut during treatment so that the length becomes short or electrical and mechanical characteristics are lowered due to occurrence of defects caused by oxidation.

### [Disclosure]

### [Technical Problem]

The present invention is to provide surface-modified carbon nanotubes implementing excellent conductivity and simultaneously having improved dispersibility, and a dispersion and a secondary battery including the same.

However, technical problems to be solved by the present invention are not limited to the above-mentioned technical problems, and other technical problems, which are not mentioned above, may be clearly understood by those skilled in the art from the following descriptions.

### [Technical Solution]

One embodiment of the present invention provides surface-modified carbon nanotubes comprising: carbon nanotubes; and a surfactant adsorbed on surfaces of the carbon nanotubes, and satisfying Equation 1 below during thermogravimetric analysis under a temperature condition of 30 °C or more and 900 °C or less:$14.0 % \leq A \leq 40.0 %$

in Equation 1 above, A is, with respect to peaks obtained by separating overlapped peaks of a thermal decomposition derivative curve of the surface-modified carbon nanotubes, a value representing a sum of areas of peaks included in a range of 400 °C or more and 600 °C or less as a percentage among a total area of peaks corresponding to the carbon nanotubes included in a range of 400 °C or more and 800 °C or less.

According to one embodiment of the present invention, the surfactant may comprise at least one of an anionic surfactant and a cationic surfactant.

According to one embodiment of the present invention, a molecular weight of the surfactant may be 200 g/mol or more and 500 g/mol or less.

According to one embodiment of the present invention, the surface-modified carbon nanotubes may have a G/D ratio in a Raman spectrum of 20 or more and 60 or less, the G is a maximum peak intensity within a range of 1560 to 1600 cm⁻¹ in the Raman spectrum, and the D is a maximum peak intensity within a range of 1310 to 1360 cm⁻¹.

According to one embodiment of the present invention, the surface-modified carbon nanotubes may comprise an oxidizing agent.

According to one embodiment of the present invention, the oxidizing agent may comprise a potassium-based oxidizing agent having an ionization constant of -9 or more and 4 or less.

According to one embodiment of the present invention, the surface-modified carbon nanotubes comprising the oxidizing agent may be a reaction product of a mixture comprising the carbon nanotubes, the surfactant, and the oxidizing agent, and the mixture may have a molar ratio of the surfactant to the oxidizing agent of 1:5 to 1:200.

According to one embodiment of the present invention, the surface-modified carbon nanotubes may comprise an organic acid containing one or more carboxyl groups.

According to one embodiment of the present invention, a carbon number of the organic acid may be 1 or more and 7 or less.

According to one embodiment of the present invention, a content of the organic acid may be 0.3 wt% or more and 1.3 wt% or less.

According to one embodiment of the present invention, the surface-modified carbon nanotubes comprising the organic acid may be a reaction product of a mixture comprising the carbon nanotubes, the surfactant, and the organic acid, and the mixture may have a molar ratio of the surfactant to the organic acid of 1:100 to 1:600.

One embodiment of the present invention provides surface-modified carbon nanotubes, comprising: carbon nanotubes; and a surfactant bonded to surfaces of the carbon nanotubes, wherein a content of the surfactant is 0.5 wt% or more and 4.0 wt% or less.

One embodiment of the present invention provides a dispersion comprising the surface-modified carbon nanotubes.

According to one embodiment of the present invention, the dispersion comprising the surface-modified carbon nanotubes may have a sheet resistance value of 0.5 Ω/□ or more and less than 1 Ω/□ when coated to a 10 µm thickness.

According to one embodiment of the present invention, the dispersion comprising the surface-modified carbon nanotubes may have an absorbance of 0.4 or more for light of a 550 nm wavelength.

One embodiment of the present invention provides a secondary battery comprising an electrode comprising the surface-modified carbon nanotubes.

### [Advantageous Effects]

The surface-modified carbon nanotubes according to one embodiment of the present invention may be excellent in conductivity and dispersibility.

In addition, the surface-modified carbon nanotubes according to one embodiment of the present invention have an advantage in that the surfactant is adsorbed on the surfaces of the carbon nanotubes, so that excellent dispersibility and conductivity can be implemented without damage to the carbon nanotubes.

In addition, the dispersion according to one embodiment of the present invention may represent excellent conductivity and dispersibility by including the surface-modified carbon nanotubes.

In addition, the secondary battery according to one embodiment of the present invention has an advantage in that electrochemical performance is excellent by including the surface-modified carbon nanotubes.

The effects of the present invention are not limited to the above-mentioned effects, and other effects, which are not mentioned above, may be clearly understood by those skilled in the art from the present specification and the accompanying drawings.

### [Description of Drawings]

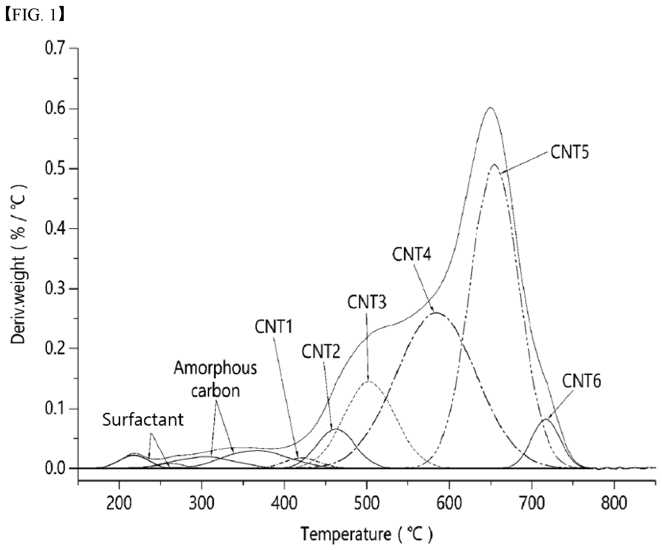

FIG. 1 is a view representing thermogravimetric analysis results of the surface-modified carbon nanotubes manufactured in Example 6 of the present invention.

### [Mode for Disclosure]

Throughout the specification of the present application, when it is said that a certain part "comprises/includes" a certain component (or constituent element), this may mean that other components may be further included, rather than excluding other components, unless specifically described to the contrary.

Throughout the specification of the present application, when one member is disposed "on" another member, this includes not only a case where the one member is brought into contact with another member, but also a case where still another member is present between the two members.

Throughout the specification, a unit "parts by weight" may mean a ratio of weight between each component.

Throughout the specification, terms including an ordinal number such as "first" and "second" are used for the purpose of distinguishing one component from another component, and are not limited by the ordinal number. For example, within the scope of rights of the invention, a first component may also be named a second component, and similarly, a second component may be named a first component.

Throughout the specification, "a weight average molecular weight", "a molecular weight", and the like of a certain compound may be calculated by using a molecular weight and a molecular weight distribution of the compound. Specifically, tetrahydrofuran (THF) and the compound are put in a glass bottle of 1 ml to prepare a sample specimen in which a concentration of the compound is 1 wt%, and after filtering a standard specimen (polystyrene) and the sample specimen through a filter (pore size is 0.45 µm), they are injected into a GPC injector, and an elution time of the sample specimen is compared with a calibration curve of the standard specimen, so that a molecular weight and a molecular weight distribution of the compound may be obtained. In this case, Infinity II 1260 (Agilient Co.) may be used as a measurement instrument, a flow rate may be set to 1.00 mL/min, and a column temperature may be set to 40.0 °C.

Throughout the specification, a viscosity of a compound or a composition may be a value measured at 50 s⁻¹ by using a rotational rheometer DHR-2 (Plate Φ40mm) at a temperature of 23 °C.

Hereinafter, the present specification will be described in more detail.

One embodiment of the present invention provides surface-modified carbon nanotubes including: carbon nanotubes; and a surfactant adsorbed on surfaces of the carbon nanotubes, and satisfying Equation 1 below during thermogravimetric analysis under a temperature condition of 30 °C or more and 900 °C or less:$14.0 % \leq A \leq 40.0 %$

In Equation 1 above, A is, with respect to peaks obtained by separating overlapped peaks of a thermal decomposition derivative curve of the surface-modified carbon nanotubes, a value representing a sum of areas of peaks included in a range of 400 °C or more and 600 °C or less as a percentage among a total area of peaks corresponding to the carbon nanotubes included in a range of 400 °C or more and 800 °C or less.

The surface-modified carbon nanotubes according to one embodiment of the present invention may be excellent in conductivity and dispersibility. In addition, the surface-modified carbon nanotubes have an advantage in that the surfactant is adsorbed on the surfaces of the carbon nanotubes, so that excellent dispersibility and conductivity can be implemented without damage to the carbon nanotubes.

According to one embodiment of the present invention, Equation 1 above may be set based on data of analyzing the surface-modified carbon nanotubes by using a thermogravimetric analyzer (TGA) under conditions of an air atmosphere (flow rate 100 ml/min), a heating rate of 5 °C/min, and a temperature range of 30 °C or more and 900 °C or less. During thermogravimetric analysis, for the surface-modified carbon nanotubes, peaks constituting a curve can be separated and displayed and confirmed by performing deconvolution of a derivative curve.

According to one embodiment of the present invention, the surface-modified carbon nanotubes satisfy Equation 1 above. Specifically, a value of A calculated by Equation 2 below of the surface-modified carbon nanotubes may be 14.0 % or more and 40.0 % or less.$A = B / C \times 100$

In Equation 2 above, C is a sum of areas of peaks corresponding to the carbon nanotubes in a range of 400 °C or more and 800 °C or less. B is a sum of areas of peaks corresponding to the carbon nanotubes in a range of 400 °C or more and 600 °C or less.

For example, as a result of thermogravimetric analysis of the surface-modified carbon nanotubes, CNT1, CNT2, CNT3, CNT4, CNT5, and CNT6 peaks corresponding to the carbon nanotubes may appear in a range of 400 °C or more and 800 °C or less. In this case, a value obtained by summing areas of the CNT1, CNT2, CNT3, CNT4, CNT5, and CNT6 peaks corresponding to the range of 400 °C or more and 800 °C or less may correspond to C. In addition, a value obtained by summing areas of the CNT1, CNT2, and CNT3 peaks corresponding to the range of 400 °C or more and 600 °C or less may correspond to B.

Specifically, the value of A calculated by Equation 2 above of the surface-modified carbon nanotubes may be 16.0 % or more and 38.0 % or less, 18.0 % or more and 36.0 % or less, 20.0 % or more and 34.0 % or less, 22.0 % or more and 32.0 % or less, 24.0 % or more and 30.0 % or less, 26.0 % or more and 28.0 % or less, 14.0 % or more and 30.0 % or less, 16.0 % or more and 28.0 % or less, 18.0 % or more and 26.0 % or less, 20.0 % or more and 24.0 % or less, 26.0 % or more and 40.0 % or less, 28.0 % or more and 38.0 % or less, 30.0 % or more and 36.0 % or less, or 32.0 % or more and 34.0 % or less. For the surface-modified carbon nanotubes satisfying Equation 1 above, conductivity is improved and simultaneously dispersibility can also be effectively improved.

According to one embodiment of the present invention, the surfactant may comprise at least one of an anionic surfactant and a cationic surfactant. By using at least one of the anionic surfactant and the cationic surfactant as the surfactant to be adsorbed on the surfaces of the carbon nanotubes, dispersibility of the surface-modified carbon nanotubes can be improved, and at the same time, conductivity can be improved. When using an amphoteric surfactant or a non-ionic surfactant as the surfactant, it may be difficult to effectively improve conductivity together with dispersibility.

According to one embodiment of the present invention, a molecular weight of the surfactant may be 200 g/mol or more and 500 g/mol or less. Specifically, the molecular weight of the surfactant may be 230 g/mol or more and 450 g/mol or less, 250 g/mol or more and 400 g/mol or less, 275 g/mol or more and 380 g/mol or less, 200 g/mol or more and 400 g/mol or less, 250 g/mol or more and 350 g/mol or less, 300 g/mol or more and 500 g/mol or less, 300 g/mol or more and 450 g/mol or less, or 300 g/mol or more and 400 g/mol or less. The surfactant having the molecular weight satisfying the aforementioned range can be easily adsorbed on the surfaces of the carbon nanotubes, and can effectively improve dispersibility and conductivity of the carbon nanotubes.

According to one embodiment of the present invention, a carbon number of the surfactant may be 10 or more and 20 or less. Specifically, the carbon number contained in the surfactant may be 12 or more and 19 or less, 15 or more and 19 or less, 18 or more and 19 or less, 10 or more and 15 or less, or 16 or more and 20 or less. When the carbon number contained in the surfactant satisfies the aforementioned range, the surfactant can be easily adsorbed on the surfaces of the carbon nanotubes, and can effectively improve dispersibility and conductivity of the carbon nanotubes.

According to one embodiment of the present invention, as long as the surfactant satisfies the aforementioned physical properties, a surfactant used in the art can be used without limitation. For example, the surfactant may include at least one of sodium dodecyl sulfate and sodium dodecyl benzene sulfonate as the anionic surfactant satisfying the aforementioned range of the molecular weight and the carbon number. In addition, the surfactant may include at least cetyl trimethyl ammonium bromide as the cationic surfactant satisfying the aforementioned range of the molecular weight and the carbon number.

According to one embodiment of the present invention, the surface-modified carbon nanotubes may have a G/D ratio in a Raman spectrum of 20 or more and 60 or less, and the G is a maximum peak intensity within a range of 1560 to 1600 cm⁻¹ in the Raman spectrum, and the D is a maximum peak intensity within a range of 1310 to 1360 cm⁻¹. Specifically, the G/D ratio in the Raman spectrum of the surface-modified carbon nanotubes may be 30 or more and 60 or less, 35 or more and 55 or less, 40 or more and 50 or less, 20 or more and 50 or less, 30 or more and 45 or less, 40 or more and 60 or less, or 45 or more and 55 or less. When the G/D ratio of the surface-modified carbon nanotubes satisfies the aforementioned range, conductivity and dispersibility of the surface-modified carbon nanotubes can be improved. Specifically, the surface-modified carbon nanotubes satisfying the G/D ratio of the aforementioned range can be excellent in dispersibility in a solvent, and through this, conductivity in a dispersion can be improved.

According to one embodiment of the present invention, the surface-modified carbon nanotubes may include an oxidizing agent. That is, the surface-modified carbon nanotubes may be treated with the oxidizing agent. The carbon nanotubes whose surfaces are modified with the surfactant may be oxidized by being treated with the oxidizing agent. By treating the surface-modified carbon nanotubes with the oxidizing agent, dispersibility of the surface-modified carbon nanotubes can be further improved. Meanwhile, since the surface-modified carbon nanotubes treated with the oxidizing agent still contain the surfactant, aggregation of the carbon nanotubes can be suppressed and simultaneously a decrease in conductivity can be effectively prevented.

According to one embodiment of the present invention, the oxidizing agent may comprise a potassium-based oxidizing agent having an ionization constant of -9 or more and 4 or less. Specifically, the ionization constant of the potassium-based oxidizing agent may be -9 or more and 3 or less, -8 or more and 4 or less, -8 or more and 3 or less, or -7 or more and 2 or less. When using the oxidizing agent whose ionization constant satisfies the aforementioned range, the surface-modified carbon nanotubes may be more stably oxidized. The potassium-based oxidizing agent may include at least one of potassium peroxymonosulfate and potassium permanganate (KMnO₄). Meanwhile, an acid or potassium peroxymonosulfate may be used together to adjust pH during treatment of the surface-modified carbon nanotubes with the oxidizing agent.

According to one embodiment of the present invention, the surface-modified carbon nanotubes including the oxidizing agent are a reaction product of a mixture including the carbon nanotubes, the surfactant, and the oxidizing agent, and the mixture may have a molar ratio of the surfactant to the oxidizing agent of 1:5 to 1:200. Specifically, the molar ratio of the surfactant to the oxidizing agent included in the mixture may be 1:5 to 1:180, 1:5 to 1:160, 1:5 to 1:140, 1:5 to 1:120, 1:5 to 1:100, 1:5 to 1:80, 1:5 to 1:60, 1:5 to 1:40, 1:5 to 1:20, 1:100 to 1:200, 1:120 to 1:200, 1:140 to 1:200, or 1:160 to 1:200. When the molar ratio of the surfactant to the oxidizing agent is within the aforementioned range, the carbon nanotubes whose surfaces are modified with the surfactant can be stably oxidized.

According to one embodiment of the present invention, for the mixture solution, a content of the surfactant may be 1 mmol or more and 10 mmol or less, 1 mmol or more and 8 mmol or less, 1 mmol or more and 6 mmol or less, 1 mmol or more and 4 mmol or less, 1 mmol or more and 5 mmol or less, or 5 mmol or more and 10 mmol or less. In addition, for the mixture solution, a content of the oxidizing agent may be 3 mmol or more and 350 mmol or less, 3 mmol or more and 330 mmol or less, 3 mmol or more and 300 mmol or less, 3 mmol or more and 250 mmol or less, 3 mmol or more and 200 mmol or less, 3 mmol or more and 150 mmol or less, 3 mmol or more and 100 mmol or less, 3 mmol or more and 80 mmol or less, 3 mmol or more and 60 mmol or less, or 3 mmol or more and 30 mmol or less. When the contents of the surfactant and the oxidizing agent included in the mixture solution are within the aforementioned ranges, the carbon nanotubes can be effectively oxidized, and the surfactant adsorbed on the surfaces of the carbon nanotubes can be stably anchored.

Based on 100 parts by weight of the mixture solution, a content of the carbon nanotubes may be 0.1 parts by weight or more and 5 parts by weight or less.

According to one embodiment of the present invention, the surface-modified carbon nanotubes treated with the oxidizing agent may contain the surfactant of 0.5 wt% or more and 4.0 wt% or less. That is, based on 100 wt% of the oxidation-treated surface-modified carbon nanotubes, the content of the surfactant adsorbed on the surfaces of the carbon nanotubes may be 0.5 wt% or more and 4.0 wt% or less, 1 wt% or more and 3.5 wt% or less, 1.5 wt% or more and 3.0 wt% or less, 2.0 wt% or more and 2.5 wt% or less, 0.5 wt% or more and 2.5 wt% or less, 1.5 wt% or more and 2.0 wt% or less, 2.0 wt% or more and 4.0 wt% or less, 2.5 wt% or more and 3.5 wt% or less, or 3.0 wt% or more and 4.0 wt% or less. When the content of the surfactant included in the oxidation-treated surface-modified carbon nanotubes is within the aforementioned range, dispersibility and conductivity of the carbon nanotubes can be effectively improved.

The content of the surfactant included in the oxidation-treated surface-modified carbon nanotubes may be measured by using thermogravimetric analysis (TGA). Specifically, in a thermal decomposition curve obtained through TGA, the content of the surfactant existing in the oxidation-treated surface-modified carbon nanotubes may be calculated by using an area of an alkyl chain decomposition peak in a temperature range where the surfactant is decomposed. For example, when using sodium dodecyl sulfate (SDS) as the surfactant, a content of SDS which is the surfactant may be calculated by using an area of a peak of an alkyl chain decomposed at 200 to 270 °C.

According to one embodiment of the present invention, the surface-modified carbon nanotubes may include an organic acid containing one or more carboxyl groups. That is, the surface-modified carbon nanotubes may be treated with the organic acid including one or more carboxyl groups. By treating the surface-modified carbon nanotubes by using the organic acid, aggregation of the carbon nanotubes can be suppressed, and dispersibility and conductivity of the carbon nanotubes can be effectively improved. Particularly, when the surfaces of the carbon nanotubes are modified with the anionic surfactant, dispersibility can be further improved due to anionic repulsion with the organic acid.

The organic acid may include a carboxyl group of 1 or more and 5 or less. Specifically, the number of the carboxyl groups contained in the organic acid may be 1 or more and 3 or less, 1 or more and 2 or less, or 3 or more and 5 or less. When the content of the carboxyl groups included in the organic acid is within the aforementioned range, dispersibility and conductivity of the carbon nanotubes can be effectively improved.

According to one embodiment of the present invention, a carbon number of the organic acid may be 1 or more and 7 or less. Specifically, the carbon number of the organic acid may be 1 or more and 6 or less, the carbon number may be 1 or more and 5 or less, 1 or more and 3 or less, or the carbon number may be 3 or more and 7 or less. The organic acid may be a straight-chain or branched-chain organic acid having the aforementioned carbon number. By using the organic acid whose carbon number satisfies the aforementioned range, dispersibility and conductivity of the carbon nanotubes can be effectively improved.

The organic acid may have the carbon number of 1 to 3, and include 1 to 2 carboxyl groups. In addition, the organic acid may have the carbon number of 4 to 7, and include 3 to 5 carboxyl groups. Particularly, when using a branched-chain organic acid having the carbon number of 4 to 7 and including 3 to 5 carboxyl groups, conductivity of the carbon nanotubes can be effectively improved.

According to one embodiment of the present invention, the surface-modified carbon nanotubes including the organic acid are a reaction product of a mixture including the carbon nanotubes, the surfactant, and the organic acid, and the mixture may have a molar ratio of the surfactant to the organic acid of 1:100 to 1:600. Specifically, the molar ratio of the surfactant to the organic acid included in the mixture may be 1:150 to 1:500, 1:150 to 1:400, or 1:150 to 1:300. When the molar ratio of the surfactant to the organic acid is within the aforementioned range, the organic acid may be stably reacted with the carbon nanotubes whose surfaces are modified with the surfactant.

According to one embodiment of the present invention, for the mixture solution, a content of the surfactant may be 1 mmol or more and 10 mmol or less, 1 mmol or more and 8 mmol or less, 1 mmol or more and 6 mmol or less, 1 mmol or more and 4 mmol or less, 1 mmol or more and 5 mmol or less, or 5 mmol or more and 10 mmol or less. In addition, for the mixture solution, a content of the organic acid may be 100 mmol or more and 1,000 mmol or less, 100 mmol or more and 800 mmol or less, 100 mmol or more and 600 mmol or less, 100 mmol or more and 400 mmol or less, 100 mmol or more and 500 mmol or less, or 600 mmol or more and 1,000 mmol or less. When the contents of the surfactant and the organic acid included in the mixture solution are within the aforementioned ranges, the organic acid may be stably reacted with the carbon nanotubes whose surfaces are modified with the surfactant.

Based on 100 parts by weight of the mixture solution, a content of the carbon nanotubes may be 0.1 parts by weight or more and 5 parts by weight or less.

According to one embodiment of the present invention, a content of the organic acid may be 0.3 wt% or more and 1.3 wt% or less. Specifically, based on 100 wt% of the organic acid-treated surface-modified carbon nanotubes, the content of the organic acid may be 0.5 wt% or more and 1.1 wt% or less, 0.7 wt% or more and 0.9 wt% or less, 0.3 wt% or more and 1.0 wt% or less, 0.5 wt% or more and 0.7 wt% or less, 0.7 wt% or more and 1.3 wt% or less, 0.9 wt% or more and 1.3 wt% or less, or 1.1 wt% or more and 1.3 wt% or less. When the content of the organic acid is within the aforementioned range, dispersibility and conductivity of the surface-modified carbon nanotubes can be further improved.

The content of the organic acid included in the organic acid-treated surface-modified carbon nanotubes may be measured by using thermogravimetric analysis (TGA). Specifically, a content of the organic acid existing in the organic acid-treated surface-modified carbon nanotubes may be calculated by using an area of an organic acid decomposition peak of a thermal decomposition curve obtained through TGA.

According to one embodiment of the present invention, the surface-modified carbon nanotubes treated with the organic acid may contain the surfactant of 0.5 wt% or more and 4.0 wt% or less. That is, based on 100 wt% of the organic acid-treated surface-modified carbon nanotubes, the content of the surfactant adsorbed on the surfaces of the carbon nanotubes may be 0.5 wt% or more and 4.0 wt% or less, 1 wt% or more and 3.5 wt% or less, 1.5 wt% or more and 3.0 wt% or less, 2.0 wt% or more and 2.5 wt% or less, 0.5 wt% or more and 2.5 wt% or less, 1.5 wt% or more and 2.0 wt% or less, 2.0 wt% or more and 4.0 wt% or less, 2.5 wt% or more and 3.5 wt% or less, or 3.0 wt% or more and 4.0 wt% or less. When the content of the surfactant included in the organic acid-treated surface-modified carbon nanotubes is within the aforementioned range, dispersibility and conductivity of the carbon nanotubes can be effectively improved. The content of the surfactant included in the organic acid-treated surface-modified carbon nanotubes may be calculated through the aforementioned method by using thermogravimetric analysis.

One embodiment of the present invention provides surface-modified carbon nanotubes, comprising: carbon nanotubes; and a surfactant bonded to surfaces of the carbon nanotubes, wherein a content of the surfactant is 0.5 wt% or more and 4.0 wt% or less.

The surface-modified carbon nanotubes according to one embodiment of the present invention may be excellent in conductivity and dispersibility. In addition, the surface-modified carbon nanotubes have an advantage in that the surfactant is adsorbed on the surfaces of the carbon nanotubes, so that excellent dispersibility and conductivity can be implemented without damage to the carbon nanotubes.

Specifically, based on 100 wt% of the surface-modified carbon nanotubes, the content of the surfactant adsorbed on the surfaces of the carbon nanotubes may be 0.5 wt% or more and 4.0 wt% or less, 1 wt% or more and 3.5 wt% or less, 1.5 wt% or more and 3.0 wt% or less, 2.0 wt% or more and 2.5 wt% or less, 0.5 wt% or more and 2.5 wt% or less, 1.5 wt% or more and 2.0 wt% or less, 2.0 wt% or more and 4.0 wt% or less, 2.5 wt% or more and 3.5 wt% or less, or 3.0 wt% or more and 4.0 wt% or less. When the content of the surfactant included in the organic acid-treated surface-modified carbon nanotubes is within the aforementioned range, dispersibility and conductivity of the carbon nanotubes can be effectively improved. The content of the surfactant included in the surface-modified carbon nanotubes can be calculated through the aforementioned method by using thermogravimetric analysis.

The surface-modified carbon nanotubes according to the present embodiment may be the same as the surface-modified carbon nanotubes according to the above embodiment. That is, the surface-modified carbon nanotubes whose content of the surfactant is 0.5 wt% or more and 4.0 wt% or less may satisfy the aforementioned Equation 1.

In addition, the surface-modified carbon nanotubes according to the present embodiment may use the same surfactant, oxidizing agent, and organic acid as described in the surface-modified carbon nanotubes according to the aforementioned embodiment. In addition, the surface-modified carbon nanotubes according to the present embodiment may contain the same components as described in the surface-modified carbon nanotubes according to the aforementioned embodiment, and contents thereof may be the same.

One embodiment of the present invention provides a dispersion comprising the surface-modified carbon nanotubes. The dispersion may represent excellent conductivity and dispersibility by including the surface-modified carbon nanotubes.

According to one embodiment of the present invention, based on 100 parts by weight of the dispersion, the content of the surface-modified carbon nanotubes may be 0.1 parts by weight or more and 5 parts by weight or less.

According to one embodiment of the present invention, for the dispersion including the surface-modified carbon nanotubes, a sheet resistance value may be 0.5 Ω/□ or more and less than 1 Ω/□, 0.5 Ω/□ or more and 0.99 Ω/□ or less, 0.55 Ω/□ or more and 0.99 Ω/□ or less, 0.6 Ω/□ or more and 0.99 Ω/□ or less, 0.65 Ω/□ or more and 0.99 Ω/□ or less, or 0.7 Ω/□ or more and 0.99 Ω/□ or less when coated to a thickness of 10 µm. As described above, the surface-modified carbon nanotubes have excellent conductivity, and may represent the aforementioned sheet resistance value during coating.

According to one embodiment of the present invention, the dispersion comprising the surface-modified carbon nanotubes may have an absorbance of 0.4 or more for light of a 550 nm wavelength. Specifically, the absorbance for light of a 550 nm wavelength of the dispersion may be 0.4 or more and 0.6 or less, or 0.45 or more and 0.6 or less. As described above, the surface-modified carbon nanotubes have excellent dispersibility, and may exist homogeneously within the dispersion.

One embodiment of the present invention provides a method of manufacturing surface-modified carbon nanotubes. Specifically, the method may include steps of: manufacturing and reacting a mixture solution by mixing carbon nanotubes and a surfactant; filtering the carbon nanotubes whose reaction is completed in the mixture solution; and obtaining surface-modified carbon nanotubes by washing and drying the filtered carbon nanotubes.

Through the method according to one embodiment of the present invention, the surface-modified carbon nanotubes according to the aforementioned embodiment may be manufactured. That is, through the manufacturing method, surface-modified carbon nanotubes satisfying the aforementioned Equation 1 may be manufactured. In addition, through the manufacturing method, surface-modified carbon nanotubes whose content of the surfactant is 0.5 wt% or more and 4.0 wt% or less may be manufactured. In addition, through the manufacturing method, surface-modified carbon nanotubes satisfying the aforementioned Equation 1 and having the content of the surfactant of 0.5 wt% or more and 4.0 wt% or less may be manufactured.

According to one embodiment of the present invention, for the mixture solution, the content of the surfactant may be 5 parts by weight or more and 35 parts by weight or less, 10 parts by weight or more and 30 parts by weight or less, 15 parts by weight or more and 25 parts by weight or less, 5 parts by weight or more and 20 parts by weight or less, or 15 parts by weight or more and 35 parts by weight or less, with respect to 100 parts by weight of the carbon nanotubes. By adjusting the contents of the carbon nanotubes and the surfactant included in the mixture solution to the aforementioned ranges, surface-modified carbon nanotubes whose content of the surfactant is 0.5 wt% or more and 4.0 wt% or less may be effectively manufactured. In addition, surface-modified carbon nanotubes satisfying the aforementioned Equation 1 may be easily manufactured.

According to one embodiment of the present invention, a molar number of the surfactant included in the mixture solution may be 0.5 mmol or more and 7.5 mmol or less, or 0.5 mmol or more and 7.0 mmol or less. By adjusting the molar number of the surfactant included in the mixture solution to the aforementioned range, surface-modified carbon nanotubes whose content of the surfactant is 0.5 wt% or more and 4.0 wt% or less may be effectively manufactured. In addition, surface-modified carbon nanotubes satisfying the aforementioned Equation 1 may be easily manufactured.

The step of reacting the mixture solution may be performed at a temperature of 20 °C or more and 40 °C or less for a time of 10 minutes or more and 60 minutes or less. When the temperature and time for reacting the mixture solution are within the aforementioned ranges, the surfactant can be stably adsorbed on the surfaces of the carbon nanotubes.

According to one embodiment of the present invention, the method may further include a step of adding an oxidizing agent to the mixture solution, and the molar ratio of the surfactant to the oxidizing agent may be 1:5 to 1:200, 1:5 to 1:180, 1:5 to 1:160, 1:5 to 1:140, 1:5 to 1:120, 1:5 to 1:100, 1:5 to 1:80, 1:5 to 1:60, 1:5 to 1:40, 1:5 to 1:20, 1:100 to 1:200, 1:120 to 1:200, 1:140 to 1:200, or 1:160 to 1:200. When the molar ratio of the surfactant to the oxidizing agent is within the aforementioned range, the carbon nanotubes whose surfaces are modified with the surfactant can be stably oxidized.

According to one embodiment of the present invention, for the mixture solution, a content of the surfactant may be 1 mmol or more and 10 mmol or less, 1 mmol or more and 8 mmol or less, 1 mmol or more and 6 mmol or less, 1 mmol or more and 4 mmol or less, 1 mmol or more and 5 mmol or less, or 5 mmol or more and 10 mmol or less. In addition, for the mixture solution, a content of the oxidizing agent may be 3 mmol or more and 350 mmol or less, 3 mmol or more and 330 mmol or less, 3 mmol or more and 300 mmol or less, 3 mmol or more and 250 mmol or less, 3 mmol or more and 200 mmol or less, 3 mmol or more and 150 mmol or less, 3 mmol or more and 100 mmol or less, 3 mmol or more and 80 mmol or less, 3 mmol or more and 60 mmol or less, or 3 mmol or more and 30 mmol or less. When the contents of the surfactant and the oxidizing agent included in the mixture solution are within the aforementioned ranges, the carbon nanotubes can be effectively oxidized, and the surfactant adsorbed on the surfaces of the carbon nanotubes can be stably anchored.

Based on 100 parts by weight of the mixture solution, a content of the carbon nanotubes may be 0.1 parts by weight or more and 5 parts by weight or less.

The step of reacting the mixture solution may be performed at a temperature of 20 °C or more and 40 °C or less for a time of 1 hour or more and 5 hours or less. When the temperature and time for reacting the mixture solution are within the aforementioned ranges, the surface-modified carbon nanotubes can be effectively oxidized.

According to one embodiment of the present invention, the method may further include a step of adding an organic acid to the mixture solution, and the molar ratio of the surfactant to the organic acid may be 1:100 to 1:600, 1:150 to 1:500, 1:150 to 1:400, or 1:150 to 1:300. When the molar ratio of the surfactant to the organic acid is within the aforementioned range, the organic acid may be stably reacted with the carbon nanotubes whose surfaces are modified with the surfactant.

According to one embodiment of the present invention, for the mixture solution, a content of the surfactant may be 1 mmol or more and 10 mmol or less, 1 mmol or more and 8 mmol or less, 1 mmol or more and 6 mmol or less, 1 mmol or more and 4 mmol or less, 1 mmol or more and 5 mmol or less, or 5 mmol or more and 10 mmol or less. In addition, for the mixture solution, a content of the organic acid may be 100 mmol or more and 1,000 mmol or less, 100 mmol or more and 800 mmol or less, 100 mmol or more and 600 mmol or less, 100 mmol or more and 400 mmol or less, 100 mmol or more and 500 mmol or less, or 600 mmol or more and 1,000 mmol or less. When the contents of the surfactant and the organic acid included in the mixture solution are within the aforementioned ranges, the organic acid may be stably reacted with the carbon nanotubes whose surfaces are modified with the surfactant.

Based on 100 parts by weight of the mixture solution, a content of the carbon nanotubes may be 0.1 parts by weight or more and 5 parts by weight or less.

The step of reacting the mixture solution may be performed at a temperature of 30 °C or more and 60 °C or less for a time of 5 hour or more and 10 hours or less. When the temperature and time for reacting the mixture solution are within the aforementioned ranges, the organic acid can be effectively reacted with the carbon nanotubes whose surfaces are modified.

According to one embodiment of the present invention, the step of filtering the carbon nanotubes whose reaction is completed in the mixture solution can perform filtering by using methods and devices used in the art without limitation. For example, by performing vacuum filtration on the mixture solution whose reaction is completed, unreacted compounds, impurities, and the like are filtered to obtain surface-modified carbon nanotubes.

According to one embodiment of the present invention, by washing and drying the filtered carbon nanotubes, surface-modified carbon nanotubes may be obtained. The surface-modified carbon nanotubes may be washed with water, and a washing process may be performed until pH becomes neutral.

One embodiment of the present invention provides a secondary battery comprising an electrode comprising the surface-modified carbon nanotubes.

The secondary battery according to one embodiment of the present invention has an advantage in that electrochemical performance is excellent by including the surface-modified carbon nanotubes. Specifically, for the secondary battery, by including the surface-modified carbon nanotubes as a conductive material, electrochemical performance can be effectively improved.

According to one embodiment of the present invention, the secondary battery may include a positive electrode including the surface-modified carbon nanotubes, a negative electrode including the surface-modified carbon nanotubes, or a positive electrode and a negative electrode including the surface-modified carbon nanotubes. The secondary battery may include secondary batteries being used in the art without limitation.

According to one embodiment of the present invention, the secondary battery may include a positive electrode; a negative electrode; a separator interposed between the positive electrode and the negative electrode; and an electrolyte solution.

According to one embodiment of the present invention, the positive electrode may include a positive electrode current collector and a positive electrode active material layer disposed on at least one surface of the positive electrode current collector. The positive electrode active material layer may include a positive electrode active material, a conductive material, and a positive electrode binder.

According to one embodiment of the present invention, the positive electrode current collector is not particularly limited as long as it has high conductivity without causing chemical change in a battery. Specifically, as the positive electrode current collector, copper, stainless steel, aluminum, titanium, calcined carbon, stainless steel treated with carbon, nickel, titanium, silver, or the like on a surface thereof, an aluminum-cadmium alloy, or the like may be used. The positive electrode current collector may typically have a thickness of 6 to 20 µm.

According to one embodiment of the present invention, the positive electrode active material may include a lithium transition metal oxide. The lithium transition metal oxide may be, for example, one or more selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, O≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3) and Liₓ₁₃FePO₄(0.5<x13<1.3).

According to one embodiment of the present invention, the surface-modified carbon nanotubes may be used as the conductive material of the positive electrode. In addition, the positive electrode binder may be the same as or different from the negative electrode binder.

According to one embodiment of the present invention, a method of manufacturing a negative electrode may include steps of preparing a negative electrode slurry including a negative electrode active material, a conductive material, and a negative electrode binder; forming a negative electrode active material layer by coating and drying the negative electrode slurry on at least one surface of a negative electrode current collector; and rolling the current collector on which the negative electrode active material layer is formed.

The negative electrode current collector may perform a role of a passage through which electrons are delivered from outside so that an electrochemical reaction occurs in the negative electrode active material or electrons are received from the negative electrode active material and sent to the outside. For example, as the negative electrode current collector, copper, stainless steel, aluminum, nickel, titanium, calcined carbon, aluminum or stainless steel treated with carbon, nickel, titanium, silver, or the like on a surface thereof, or the like may be used, and specifically, transition metals that adsorb carbon well, such as copper and nickel, may also be used as the current collector. For example, a thickness of the negative electrode current collector may be 6 µm to 55 µm , but the thickness of the negative electrode current collector is not limited thereto.

According to one embodiment of the present invention, the negative electrode slurry may further include any one or more of a silicon-based negative electrode active material and a graphite-based active material. For example, the silicon-based negative electrode active material may include one or more selected from the group consisting of Si, SiO_{X} (0<x≤2), a Si-C composite, and a Si-Y alloy (Y is any one element selected from the group consisting of alkali metals, alkaline earth metals, transition metals, Group 13 elements, Group 14 elements, and rare earth elements). For example, the graphite-based active material may include one or more selected from the group consisting of artificial graphite, natural graphite, graphitized carbon fiber, and graphitized mesocarbon microbeads.

According to one embodiment of the present invention, the surface-modified carbon nanotubes may be used as the conductive material of the negative electrode. The negative electrode binder can suppress separation between negative electrode active material (silicon negative electrode active material) particles, or between the negative electrode and the current collector. As the negative electrode binder, polymers commonly used in electrodes in the corresponding technical field may be used. Such a negative electrode binder may be, without limitation, the same as or different from the positive electrode binder.

According to one embodiment of the present invention, the separator is composed of a porous substrate, or may include a porous substrate and a coating layer. The porous substrate is one capable of providing a movement path for lithium ions while preventing a short circuit by electrically insulating the negative electrode and the positive electrode, and may be a porous structure having high resistance to an electrolyte solution and a fine diameter of pores.

As a constituent material of the porous substrate, an organic material or an inorganic material having electrical insulation may be used without particular limitation. The porous substrate may include, for example, at least any one selected from the group consisting of polyolefin, polyethylene terephthalate, polybutylene terephthalate, polyacetal, polyamide, polycarbonate, polyimide, polyetheretherketone, polyethersulfone, polyphenylene oxide, polyphenylene sulfide, and polyethylene naphthalene, and specifically, may include polyolefin. The polyolefin is not only excellent in coatability but also may increase a capacity per volume by thinning a thickness of the separator to increase a ratio of an electrode active material layer in a battery.

Specifically, a weight average molecular weight (M_{w}) of the polyolefin may be 100,000 to 500,000 g/mol. When the weight average molecular weight of the polyolefin is less than the numerical range, it may become difficult to secure sufficient mechanical physical properties, and when it exceeds the numerical range, a shut down function may not be implemented or molding may become difficult. The shut down function means a function of blocking movement of ions and preventing thermal runaway of a battery by closing pores of the porous substrate as a thermoplastic resin melts when a temperature of the secondary battery becomes high.

A thickness of the porous substrate may be, for example, 3 to 50 µm or 4 to 30 µm. When the thickness of the porous substrate is less than the numerical range, a function of a conductive barrier may not be sufficient, and when it exceeds the numerical range, resistance of the separator may excessively increase.

An average diameter of pores included in the porous substrate may be, for example, 10 to 100 nm. The pores included in the porous substrate are in a structure connected to each other so that gas or liquid may pass from one surface of the porous substrate to another surface.

According to one embodiment of the present invention, the separator can improve mechanical strength and heat resistance of a separator for a secondary battery, and may include a coating layer disposed on at least one surface of the porous substrate to increase ion conductivity in the secondary battery.

According to one embodiment of the present invention, the coating layer may include a binder polymer and inorganic particles. The polymer connects between the inorganic particles and may stably fix the same. The binder polymer may be used, for example, by mixing one type or two or more types selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, poly(ethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxymethyl cellulose, acrylonitrile-styrene butadiene copolymer, polyimide, and styrene-butadiene rubber.

According to one embodiment of the present invention, a weight ratio of the inorganic particles and the binder polymer (inorganic particles:binder polymer) may be 50:50 to 99:1, and specifically 70:30 to 95:5. When a content ratio of the inorganic particles to the binder polymer is less than the numerical range, a performance for improving thermal safety of a separator may be degraded as a content of the binder polymer becomes large, and a decrease in performance of a final battery may be caused as pore size and porosity decrease due to a decrease in empty spaces formed between inorganic particles, and when it exceeds the numerical range, peeling resistance of a coating layer may be weakened as the content of the binder polymer is too small.

According to one embodiment of the present invention, the inorganic particles can contribute to improving mechanical strength and heat resistance of the separator for a secondary battery. Specifically, the inorganic particles are not particularly limited as long as they are electrochemically stable. That is, the inorganic particles that may be used in the present invention are not particularly limited as long as an oxidation and/or reduction reaction does not occur in an operating voltage range of an applied secondary battery (e.g., 0 to 5 V based on Li/Li⁺). As an example, in a case of using inorganic particles having a high dielectric constant as the inorganic particles, ion conductivity of an electrolyte solution may be improved by contributing to an increase in a degree of dissociation of an electrolyte salt, for example, a lithium salt, in a liquid electrolyte.

Due to the above-described reasons, the inorganic particles may be inorganic particles having a dielectric constant of 5 or more, inorganic particles having lithium ion delivery ability, or a mixture thereof.

The inorganic particles having the dielectric constant of 5 or more may be one type or a mixture of two or more types selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0 <x<1), Pb₁₋ₓLaₓZr_{1-y}Ti_{y}O₃ (PLZT, where 0 < x < 1, 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, and SiC.

The inorganic particles having the lithium ion delivery capability may be one type or a mixture of two or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ series glass (LiₓSi_{y}S_{z}, 0<x<3, 0<y<2, 0<z<4), and P₂S₅ series glass (LiₓP_{y}S_{z}, 0<x<3, 0<y<3, 0<z<7).

For example, an average particle diameter (D₅₀) of the inorganic particles may be 1 nm to 10 µm for formation of a coating layer having a uniform thickness and appropriate porosity, specifically may be 10 nm to 2 µm, and more specifically may be 50 nm to 1 µm. The "average particle diameter (D₅₀)" means a particle diameter at a 50% point of a cumulative distribution of a number of particles according to the particle diameter. The average particle diameter may be measured by using a laser diffraction method. Specifically, after dispersing a powder to be measured in a dispersion medium, this is introduced into a commercially available laser diffraction particle size measuring device (e.g., Microtrac S3500) to measure a difference in diffraction patterns according to particle size when particles pass through a laser beam, and thus a particle size distribution may be calculated.

Specifically, the thickness of the coating layer may be 0.1 to 10 µm, specifically 1 to 3 µm, and more specifically 1.4 to 1.6 µm. When the thickness of the coating layer satisfies the numerical range, insulation and thermal stability of the separator may be increased, and at the same time, energy density of the battery may be improved.

According to one embodiment of the present invention, an electrolyte solution may include a solvent and a lithium salt. The solvent may be, for example, one type or a mixture of two or more types selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, n-methyl-2-pyrrolidone (NMP), ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, propyl propionate, and butyl propionate. The lithium salt may include, for example, anions such as NO₃⁻, F⁻ , Cl⁻, Br⁻, I⁻, PF₆⁻, and the like.

According to one embodiment of the present invention, the secondary battery may be a cylindrical, prismatic, or pouch-type secondary battery, but is not particularly limited as long as it corresponds to a charging/discharging device.

According to one embodiment of the present invention, a battery module including the secondary battery as a unit cell and a battery pack including the same may be provided. The battery pack may be used as a power source for one or more types of medium-to-large-sized devices selected from the group consisting of, for example, a power tool; an electric vehicle including an electric vehicle (EV), a hybrid electric vehicle (HEV), and a plug-in hybrid electric vehicle (PHEV); or a system for power storage.

### [Mode for carrying out the invention]

Hereinafter, the present invention will be described in detail by giving Examples in order to specifically describe the present invention. However, the examples according to the present invention may be modified in various different forms, and it is not interpreted that the scope of the present invention is limited to the following Examples. The examples of the present specification are provided to more completely explain the present invention to those skilled in the art.

### Selection of surfactant

Carbon nanotube powder having a G/D ratio of 50 or more was prepared, and sodium carboxymethyl cellulose (CMC) was prepared as a binder.

In addition, sodium dodecyl sulfate (SDS) and sodium dodecyl benzene sulfonate (SDBS) were prepared as anionic surfactants. In addition, cetyl trimethyl ammonium bromide (CTAB) was prepared as a cationic surfactant. In addition, dodecylamine, Triton X-100, Polysorbate 20, high molecular weight BYK-191, high molecular weight BYK-194N, high molecular weight BYK-2091, and polyvinylpyrrolidone having different molecular weights were prepared as surfactants.

### Reference Example 1

Thereafter, carbon nanotube powder, a binder, and water were mixed, and passed 5 times at a pressure of 700 bar by using a high-pressure homogenizer to manufacture a carbon nanotube slurry (dispersion). In this case, based on 100 parts by weight of the carbon nanotube slurry, a content of the carbon nanotubes was 0.5 parts by weight, and a content of the binder was 0.3 parts by weight.

Thereafter, SDS which is the surfactant prepared was mixed with the carbon nanotube slurry manufactured above, and secondary dispersion was performed by using a mechanical homogenizer to manufacture a slurry in which the surfactant was mixed. In this case, based on 100 parts by weight of the manufactured slurry, a content of the surfactant was 0.1 parts by weight.

### Experimental Example

With respect to the slurry manufactured above, after coating it on a PET film by using a bar coater, it was dried in an oven at 90 °C for 3 hours to form a coating layer of a 10 µm thickness. Thereafter, a sheet resistance of the coating layer was measured with a 4 point-probe by using MCP-T610 (Mitsubishi Chemical Co.), and results thereof are shown in Table 1 below.

In addition, with respect to the slurry manufactured above, a dispersion diluted so that a content of the carbon nanotubes becomes 0.05% was manufactured. Thereafter, the dispersion was centrifuged (6,000 g, 10 minutes) to obtain a supernatant, and by using UV-Vis spectroscopy (Cary4000), an absorbance for 550 nm light for the dispersion (supernatant) diluted to 1/10 was measured, and results thereof are shown in Table 1 below.

### Reference Example 2 to Reference Example 3

With respect to Reference Example 1 above, a carbon nanotube slurry and a slurry were manufactured in the same manner as in Reference Example 1 above except that types of surfactants were used differently as in Table 1 below, and sheet resistance and absorbance were measured.

### Reference Comparative Example 1

With respect to Reference Example 1 above, a slurry to which no surfactant was added was manufactured, and sheet resistance and absorbance were measured in the same manner as in Reference Example 1 above.

### Reference Comparative Example 2 to Reference Comparative Example 8

With respect to Reference Example 1 above, a carbon nanotube slurry and a slurry were manufactured in the same manner as in Reference Example 1 above except that types of surfactants were used differently as in Table 1 below, and sheet resistance and absorbance were measured.

**[Table 1]**

| | Surfactant | | | Sheet resistance (Ω/□) | Absorbance (@550nm) |
|---|---|---|---|---|---|
| | Type | Molecular weight (g/mol) | Carbon number | | |
| Reference Example 1 | SDS | 288.4 | 12 | 0.73 | 0.35 |
| Reference Example 2 | SDBS | 348.5 | 18 | 0.75 | 0.362 |
| Reference Example 3 | CTAB | 364.5 | 19 | 0.89 | 0.372 |
| Reference Comparative Example 1 | - | | | 1 | 0.17 |
| Reference Comparative Example 2 | Dodecylamine | 185.4 | 12 | 1.08 | 0.168 |
| Reference Comparative Example 3 | Triton X-100 | 625.0 | 32 | 2.46 | 0.163 |
| Reference Comparative Example 4 | Polysorbate 20 | 1227.5 | 58 | 2.19 | 0.188 |
| Reference Comparative Example 5 | BYK-191 | Polymer | - | 3.21 | 0.738 |
| Reference Comparative Example 6 | BYK-194N | | - | 1.5 | 0.275 |
| Reference Comparative Example 7 | BYK-2091 | | - | 1.71 | 0.172 |
| Reference Comparative Example 8 | Polyvinylpyrro lidone | 2,500 | - | 1.86 | 1.155 |
| Reference Comparative Example 9 | Polyvinylpyrro lidone | 10,000 | - | 2 | 1.765 |
| Reference Comparative Example 10 | Polyvinylpyrro lidone | 40,000 | - | 3.44 | 1.211 |

With reference to Table 1 above, it was confirmed that when using surfactants of Reference Example 1 to Reference Example 3, compared to Reference Comparative Example 1 to Reference Comparative Example 10, a sheet resistance value is effectively decreased and simultaneously absorbance is increased so that dispersibility is improved. Meanwhile, in cases of Reference Comparative Example 8 to Reference Comparative Example 10, absorbance was increased, but the sheet resistance value was increased, confirming that conductivity is inferior.

Accordingly, in subsequent Examples, excellent effects of carbon nanotubes whose surfaces were modified with surfactants were confirmed by using an anionic surfactant and a cationic surfactant satisfying the aforementioned range of carbon number and molecular weight.

### Manufacturing of surface-modified carbon nanotubes

### Example 1

Carbon nanotubes and SDS which is a surfactant were mixed and homogenized for 20 minutes by using a homogenizer. Thereafter, a carbon nanotube solution was filtered by using a vacuum filtration device, and water was added once to remove excess surfactant. Thereafter, the carbon nanotubes whose surfaces were modified with SDS were filtered with a filter and dried. In this case, 3 parts by weight (0.51 mmol) of the surfactant was added with respect to 100 parts by weight of the carbon nanotubes.

Thereafter, surface-modified carbon nanotube powder, CMC which is a binder, and water were mixed, and passed 5 times at a pressure of 700 bar by using a high-pressure homogenizer to manufacture a carbon nanotube slurry. In this case, based on 100 parts by weight of the carbon nanotube slurry, a content of the surface-modified carbon nanotubes was 0.5 parts by weight, and a content of the binder was 0.3 parts by weight.

### Experimental Example

With respect to the manufactured surface-modified carbon nanotubes, by using thermogravimetric analysis (TGA), a content of the surfactant existing in the surface-modified carbon nanotubes was measured through the aforementioned method, and results thereof are shown in Table 2 below.

In addition, with respect to the manufactured surface-modified carbon nanotubes, an A value was calculated according to the aforementioned Equation 2 through thermogravimetric analysis (TGA) under conditions of an air atmosphere (flow rate 100 ml/min), a heating rate of 5 °C/min, and a temperature range of 30 °C or more and 900 °C or less, and is shown in Table 3 below.

With respect to the carbon nanotube slurry manufactured above, after coating it on a PET film by using a bar coater, it was dried in an oven at 90 °C for 3 hours to form a coating layer of a 10 µm thickness. Thereafter, a sheet resistance of the coating layer was measured with a 4 point-probe by using MCP-T610 (Mitsubishi Chemical Co.), and results thereof are shown in Table 3 below.

In addition, a viscosity of the carbon nanotube slurry manufactured above was measured and is shown in Table 3 below. Specifically, the viscosity was measured at 50 s⁻¹ by using a rotational rheometer DHR-2 (Plate Φ40mm) at a temperature of 23 °C.

In addition, with respect to the manufactured surface-modified carbon nanotubes, a Raman spectrum analysis was performed. In the analyzed Raman spectrum, G which is a maximum peak intensity within a range of 1560 to 1600 cm⁻¹ and D which is a maximum peak intensity within a range of 1310 to 1360 cm⁻¹ were derived to calculate a G/D ratio, and results thereof are shown in Table 3 below.

In addition, with respect to the manufactured above CNT slurry, a dispersion diluted so that a content of the surface-modified carbon nanotubes becomes 0.05% was manufactured. Thereafter, the dispersion was centrifuged (6,000 g, 10 minutes) to obtain a supernatant, and by using UV-Vis spectroscopy (Cary4000), an absorbance for 550 nm light for the dispersion (supernatant) diluted to 1/10 was measured, and results thereof are shown in Table 3 below.

### Example 2 to Example 5

With respect to Example 1 above, surface-modified carbon nanotubes and a CNT slurry were manufactured in the same manner as in Example 1 above except that the content of the surfactant input during manufacturing of the surface-modified carbon nanotubes was adjusted as in Table 2 below.

In addition, in the same manner as in the Example 1, the content of the surfactant for the manufactured surface-modified carbon nanotubes was calculated and is shown in Table 2 below.

In addition, in the same manner as in the Example 1, sheet resistance, viscosity, G/D ratio, absorbance, and the A value were measured and are shown in Table 3 below.

### Comparative Example 1 to Comparative Example 6

With respect to Example 1 above, surface-modified carbon nanotubes and a CNT slurry were manufactured in the same manner as in Example 1 above except that the type and content of the surfactant input during manufacturing of the surface-modified carbon nanotubes were adjusted as in Table 2 below.

In addition, in the same manner as in the Example 1, the content of the surfactant for the manufactured surface-modified carbon nanotubes was calculated and is shown in Table 2 below.

In addition, in the same manner as in the Example 1, sheet resistance, viscosity, G/D ratio, absorbance, and the A value were measured and are shown in Table 3 below.

**[Table 2]**

| | Surfactant | | | |
|---|---|---|---|---|
| | Type | Input amount | | Content (wt%) |
| | | Parts by weight | mmol | |
| Example 1 | SDS | 3 | 0.51 | 0.52 |
| Example 2 | SDS | 5 | 0.85 | 0.66 |
| Example 3 | SDS | 10 | 1.7 | 1.39 |
| Example 4 | SDS | 20 | 3.4 | 2.53 |
| Example 5 | SDS | 30 | 5.1 | 3.9 |
| Comparative Example 1 | SDS | 40 | 6.8 | 4.59 |
| Comparative Example 2 | SDS | 50 | 8.5 | 5.86 |
| Comparative Example 3 | SDS | 60 | 10.2 | 7.21 |
| Comparative Example 4 | SDS | 1 | 0.17 | 0.36 |
| Comparative Example 5 | Dodecylamine | 10 | 2.64 | 0.3 |
| Comparative Example 6 | Triton X-100 | 10 | - | 5 |

In Table 2 above, the input amount of the surfactant is a content (parts by weight) with respect to 100 parts by weight of the carbon nanotubes, and the content (wt%) of the surfactant is with respect to 100 wt% of the surface-modified carbon nanotubes.

**[Table 3]**

| | Surfactant | Sheet resistance (Ω/□) | Viscosity (cp) | G/D ratio | Absorbance @550nm | A |
|---|---|---|---|---|---|---|
| Example 1 | SDS | 0.98 | 1,765 | 61.8 | 0.405 | 16.25 |
| Example 2 | SDS | 0.97 | 1,476 | 57.3 | 0.432 | 25.62 |
| Example 3 | SDS | 0.87 | 1,260 | 56.8 | 0.440 | 28.34 |
| Example 4 | SDS | 0.8 | 1,011 | 58.0 | 0.446 | 30.66 |
| Example 5 | SDS | 0.93 | 863 | 55.6 | 0.455 | 38.84 |
| Comparative Example 1 | SDS | 1.06 | 672 | 57.2 | 0.468 | 40.65 |
| Comparative Example 2 | SDS | 1.45 | 230 (poor coating) | 55.9 | 0.480 | 41.02 |
| Comparative Example 3 | SDS | 1.98 | 108 (poor coating) | 56.0 | 0.493 | 42.86 |
| Comparative Example 4 | SDS | 1.02 | 1,890 | 63.2 | 0.374 | 13.58 |
| Comparative Example 5 | Dodecylamine | 1.09 | 2,008 | 61.6 | 0.364 | 12.89 |
| Comparative Example 6 | Triton X-100 | 3.64 | 980 | 53.3 | 0.452 | 40.08 |

With reference to Table 2 and Table 3 above, it was confirmed that in cases of Example 1 to Example 5 where the content of the surfactant existing in the surface-modified carbon nanotubes satisfies the aforementioned range, compared to Comparative Example 1 to Comparative Example 6 where the content of the surfactant existing in the surface-modified carbon nanotubes is out of the aforementioned range, the sheet resistance value is low, so that conductivity is excellent. In addition, it was confirmed that in cases of Example 1 to Example 5 satisfying Equation 1, compared to Comparative Example 1 to Comparative Example 6 not satisfying Equation 1, the sheet resistance value is low, so that conductivity is excellent.

### Surface-Modified Carbon Nanotubes Treated with Oxidizing Agent

Potassium peroxymonosulfate (PMS), potassium permanganate (KMnO₄), HClO₄, formic acid, H₂SO₄, and NaOCl were prepared as oxidizing agents.

### Example 6

5 g of carbon nanotubes were mixed with SDS which is a surfactant, and homogenized for 20 minutes by using a homogenizer. Thereafter, for the homogenized solution, in a state where the surfactant was not removed, the oxidizing agent was input and stirred for 3 hours at room temperature to oxidize the carbon nanotubes whose surfaces were modified with the surfactant. In this case, 1.7 mmol of the surfactant was input, and 16.3 mmol of the oxidizing agent was input. Based on 100 parts by weight of the mixture solution (homogenized solution), a content of the carbon nanotubes was 5 parts by weight.

Thereafter, the carbon nanotube solution whose reaction was finished was filtered while being washed with water by using a vacuum filtration device. In this case, washing was performed until pH of the filtrate became neutral, and the washed oxidation-treated surface-modified carbon nanotubes were filtered with a filter and then dried.

Thereafter, surface-modified carbon nanotube powder, CMC which is a binder, and water were mixed, and passed 5 times at a pressure of 700 bar by using a high-pressure homogenizer to manufacture a carbon nanotube slurry. In this case, based on 100 parts by weight of the carbon nanotube slurry, a content of the surface-modified carbon nanotubes was 0.5 parts by weight, and a content of the binder was 0.3 parts by weight.

### Experimental Example

In the same manner as in Example 1 above, a content of the surfactant for the manufactured oxidation-treated surface-modified carbon nanotubes was calculated and is shown in Table 4 below.

In addition, in the same manner as in Example 1 above, sheet resistance, G/D ratio, absorbance, and an A value were measured and are shown in Table 5 below.

FIG. 1 is a view representing thermogravimetric analysis results of the surface-modified carbon nanotubes manufactured in Example 6 of the present invention. With reference to FIG. 1, as a result of thermogravimetric analysis of the surface-modified carbon nanotubes manufactured in Example 6, it was confirmed that peaks of CNT1, CNT2, CNT3, CNT4, CNT5, and CNT6 corresponding to the carbon nanotubes appear in a range of 400 °C or more and 800 °C or less. Thereafter, a value obtained by summing areas of the CNT1, CNT2, CNT3, CNT4, CNT5, and CNT6 peaks corresponding to the range of 400 °C or more and 800 °C or less was set to C. In addition, a value obtained by summing areas of the CNT1, CNT2, and CNT3 peaks corresponding to the range of 400 °C or more and 600 °C or less was set to B. Thereafter, it was confirmed through Equation 2 below that the A value of the surface-modified carbon nanotubes manufactured in Example 6 corresponds to 14.51.$A = B / C \times 100$

### Example 7 to Example 20

With respect to the Example 6, oxidation-treated surface-modified carbon nanotubes and a CNT slurry were manufactured in the same manner as in Example 6 above except that the type of the oxidizing agent, the content of the surfactant, and the content of the oxidizing agent were adjusted as in Table 4 below.

In addition, in the same manner as in the Example 6, the content of the surfactant for the manufactured oxidation-treated surface-modified carbon nanotubes was calculated and is shown in Table 4 below.

In addition, in the same manner as in the Example 6, the G/D ratio, sheet resistance, absorbance, and the A value were measured and are shown in Table 5 below.

**[Table 4]**

| | Oxidizing agent | Surfactant (mmol) | Oxidizing agent (mmol) | Surfactant: Oxidizing agent | Surfactant content (wt%) |
|---|---|---|---|---|---|
| Example 6 | PMS | 1.7 | 16.3 | 1 : 9 | 1.76 |
| Example 7 | PMS | 1.7 | 48.8 | 1 : 28 | 1.94 |
| Example 8 | PMS | 1.7 | 81.3 | 1 : 47 | 1.72 |
| Example 9 | PMS | 1.7 | 100.9 | 1 : 58 | 1.64 |
| Example 10 | PMS | 1.7 | 162.7 | 1 : 94 | 1.30 |
| Example 11 | PMS | 1.7 | 325.3 | 1 : 191 | 1.20 |
| Example 12 | PMS | 3.5 | 48.8 | 1 : 14 | 2.48 |
| Example 13 | PMS | 3.5 | 81.3 | 1 : 24 | 2.06 |
| Example 14 | PMS | 6.9 | 48.8 | 1 : 7 | 3.26 |
| Example 15 | PMS | 6.9 | 81.3 | 1 : 12 | 2.68 |
| Example 16 | KMnO₄ | 1.7 | 100.4 | 1 : 58 | 1.75 |
| Example 17 | HClO₄ | 1.7 | 100.3 | 1:58 | 0.72 |
| Example 18 | Formic acid | 1.7 | 100.9 | 1:58 | 1.66 |
| Example 19 | PMS | 1.7 | 4.9 | 1:3 | 2.15 |
| Example 20 | PMS | 1.7 | 357.9 | 1:211 | 0.98 |

In Table 4 above, the content (wt%) of the surfactant is with respect to 100 wt% of the oxidation-treated surface-modified carbon nanotubes. In this case, pKa of HClO₄ used as the oxidizing agent is -9, and pKa of formic acid is 3.75.

**[Table 5]**

| | Surfactant | G/D ratio | Sheet resistance (Ω/□) | Absorbance (@550nm) | A |
|---|---|---|---|---|---|
| Example 6 | SDS | 51.2 | 0.82 | 0.476 | 14.51 |
| Example 7 | SDS | 50.5 | 0.76 | 0.48 | 17.23 |
| Example 8 | SDS | 40.1 | 0.88 | 0.463 | 19.35 |
| Example 9 | SDS | 32.1 | 0.84 | 0.525 | 25.66 |
| Example 10 | SDS | 23.8 | 0.96 | 0.548 | 38.96 |
| Example 11 | SDS | 22.2 | 0.99 | 0.568 | 39.82 |
| Example 12 | SDS | 52.8 | 0.83 | 0.488 | 15.09 |
| Example 13 | SDS | 46.7 | 0.74 | 0.515 | 16.84 |
| Example 14 | SDS | 55.9 | 0.88 | 0.494 | 16.16 |
| Example 15 | SDS | 50.1 | 0.8 | 0.524 | 17.11 |
| Example 16 | SDS | 30.9 | 0.86 | 0.532 | 32.16 |
| Example 17 | SDS | 59.2 | 0.96 | 0.410 | 14.22 |
| Example 18 | SDS | 58.6 | 0.92 | 0.426 | 15.2 |
| Example 19 | SDS | 59.8 | 0.90 | 0.466 | 14.05 |
| Example 20 | SDS | 21.9 | 0.99 | 0.572 | 39.84 |

With reference to Table 4 and Table 5 above, it was confirmed that Example 6 to Example 20 of the present invention are excellent in conductivity because a sheet resistance value is low. In addition, it was confirmed that Example 6 to Example 20 are excellent in dispersibility considering absorbance values for 550 nm.

### Example 21 (Using surfactant CTAB)

5 g of carbon nanotubes were mixed with CTAB which is a surfactant, and homogenized for 20 minutes by using a homogenizer. Thereafter, for the homogenized solution, in a state where the surfactant was not removed, the oxidizing agent was input and stirred for 3 hours at room temperature to oxidize the carbon nanotubes whose surfaces were modified with the surfactant. In this case, 1.7 mmol of the surfactant was input, and 48.8 mmol of the oxidizing agent was input. Based on 100 parts by weight of the mixture solution (homogenized solution), a content of the carbon nanotubes was 5 parts by weight.

Thereafter, the carbon nanotube solution whose reaction was finished was filtered while being washed with water by using a vacuum filtration device. In this case, washing was performed until pH of the filtrate became neutral, and the washed oxidation-treated surface-modified carbon nanotubes were filtered with a filter and then dried.

Thereafter, surface-modified carbon nanotube powder, CMC which is a binder, and water were mixed, and passed 5 times at a pressure of 700 bar by using a high-pressure homogenizer to manufacture a carbon nanotube slurry. In this case, based on 100 parts by weight of the carbon nanotube slurry, a content of the surface-modified carbon nanotubes was 0.5 parts by weight, and a content of the binder was 0.3 parts by weight.

### Experimental Example

In the same manner as in Example 1 above, a content of the surfactant for the manufactured oxidation-treated surface-modified carbon nanotubes was calculated and is shown in Table 6 below.

In addition, in the same manner as in the Example 1, the G/D ratio, sheet resistance, absorbance, and the A value were measured and are shown in Table 7 below.

### Example 22 to Example 23 (Using surfactant CTAB)

With respect to Example 21 above, oxidation-treated surface-modified carbon nanotubes and a CNT slurry were manufactured in the same manner as in Example 21 above except that the content of the surfactant and the content of the oxidizing agent were adjusted as in Table 6 below.

In addition, in the same manner as in the Example 1, the content of the surfactant for the manufactured oxidation-treated surface-modified carbon nanotubes was calculated and is shown in Table 6 below.

In addition, in the same manner as in the Example 1, the G/D ratio, sheet resistance, absorbance, and the A value were measured and are shown in Table 7 below.

**[Table 6]**

| | Oxidizing agent | Surfactant (mmol) | Oxidizing agent (mmol) | Surfactant: Oxidizing agent | Surfactant content (wt%) |
|---|---|---|---|---|---|
| Example 21 | PMS | 1.7 | 48.8 | 1 : 28 | 1.58 |
| Example 22 | PMS | 3.5 | 48.8 | 1 : 14 | 1.96 |
| Example 23 | PMS | 6.9 | 48.8 | 1 : 7 | 2.38 |

In Table 6 above, the content (wt%) of the surfactant is with respect to 100 wt% of the oxidation-treated surface-modified carbon nanotubes.

**[Table 7]**

| | Surfactant | G/D ratio | Sheet resistance (Ω/□) | Absorbance (@550nm) | A |
|---|---|---|---|---|---|
| Example 21 | CTAB | 46.8 | 0.79 | 0.466 | 16.05 |
| Example 22 | CTAB | 52.2 | 0.82 | 0.471 | 14.58 |
| Example 23 | CTAB | 53.1 | 0.86 | 0.48 | 14.23 |

With reference to Table 6 and Table 7 above, it was confirmed that Example 21 to Example 23 of the present invention are excellent in conductivity because a sheet resistance value is low. In addition, it was confirmed that Example 21 to Example 23 are excellent in dispersibility considering absorbance values for 550 nm.

### Comparative Example 7 to Comparative Example 11

As in Table 8 below, for Comparative Example 7, carbon nanotubes were used without using a surfactant and an oxidizing agent, and a CNT slurry was manufactured in the same manner as in Example 6.

For Comparative Example 8 and Comparative Example 9, oxidizing agent-treated CNT and CNT slurries were manufactured in the same manner as in Example 6 above except that only the oxidizing agent was used and the content of the oxidizing agent was adjusted as in Table 8 below.

For Comparative Example 10 to Comparative Example 11, with respect to Example 6 above, oxidation-treated surface-modified carbon nanotubes and CNT slurries were manufactured in the same manner as in Example 6 above except that the content of the surfactant (SDS), the type of the oxidizing agent, and the content of the oxidizing agent were adjusted as in Table 8 below.

### Experimental Example

In the same manner as in Example 1 above, a content of the surfactant for the manufactured carbon nanotubes was calculated and is shown in Table 8 below.

In addition, in the same manner as in the Example 1, the G/D ratio, sheet resistance, absorbance, and the A value were measured and are shown in Table 9 below.

**[Table 8]**

| | Oxidizing agent | Surfactant (mmol) | Oxidizing agent (mmol) | Surfactant: Oxidizing agent | Surfactant content (wt%) |
|---|---|---|---|---|---|
| Comparative Example 7 | - | - | - | - | - |
| Comparative Example 8 | PMS | - | 48.8 | - | - |
| Comparative Example 9 | PMS | - | 81.3 | - | - |
| Comparative Example 10 | H₂SO₄ | 1.7 | 100.2 | 1 : 58 | 0.36 |
| Comparative Example 11 | NaOCl | 1.7 | 100.8 | 1 : 58 | 0 |

In Table 8 above, the content (wt%) of the surfactant is with respect to 100 wt% of the oxidation-treated surface-modified carbon nanotubes.

**[Table 9]**

| | Surfactant | G/D ratio | Sheet resistance (Ω/□) | Absorbance (@550nm) | A |
|---|---|---|---|---|---|
| Comparative Example 7 | - | 68.6 | 1 | 0.363 | 11.41 |
| Comparative Example 8 | - | 64.5 | 1.06 | 0.417 | 12.15 |
| Comparative Example 9 | - | 61.6 | 1.22 | 0.42 | 13.18 |
| Comparative Example 10 | SDS | 51.2 | 1.1 | 0.44 | 12.98 |
| Comparative Example 11 | SDS | 45.5 | 1.21 | 0.43 | 40.08 |

With reference to Table 8 and Table 9 above, it was confirmed that in cases of Comparative Example 7 to Comparative Example 11, conductivity is inferior because a sheet resistance value is large compared to Example 1 to Example 23 of the present invention described above.

### Surface-Modified Carbon Nanotubes Treated with Organic Acid

Acetic acid, citric acid, caproic acid, and suberic acid were prepared as organic acids.

### Example 24

5 g of carbon nanotubes were mixed with SDS which is a surfactant and citric acid which is an organic acid, and homogenized for 20 minutes by using a homogenizer. Thereafter, the homogenized solution was stirred at 40 °C for 8 hours to treat the carbon nanotubes whose surfaces were modified with the surfactant with the organic acid. In this case, 1.7 mmol of the surfactant was input, and 10 mmol of the organic acid was input. Based on 100 parts by weight of the mixture solution (homogenized solution), a content of the carbon nanotubes was 5 parts by weight.

Thereafter, the carbon nanotube solution whose reaction was finished was filtered while being washed with water by using a vacuum filtration device. In this case, washing was performed until pH of the filtrate became neutral, and the washed organic acid-treated surface-modified carbon nanotubes were filtered with a filter and then dried.

Thereafter, surface-modified carbon nanotube powder, CMC which is a binder, and water were mixed, and passed 5 times at a pressure of 700 bar by using a high-pressure homogenizer to manufacture a carbon nanotube slurry. In this case, based on 100 parts by weight of the carbon nanotube slurry, a content of the surface-modified carbon nanotubes was 0.5 parts by weight, and a content of the binder was 0.3 parts by weight.

### Experimental Example

In the same manner as in Example 1 above, a content of the surfactant and a content of the organic acid for the organic acid-treated surface-modified carbon nanotubes were calculated and are shown in Table 10 below.

In addition, in the same manner as in the Example 1, the G/D ratio, sheet resistance, absorbance, and the A value were measured and are shown in Table 11 below.

### Example 25 to Example 40

With respect to Example 24 above, organic acid-treated surface-modified carbon nanotubes and CNT slurries were manufactured in the same manner as in Example 24 above except that the type and content of the surfactant, and the type and content of the organic acid were adjusted as in Table 10 below. In this case, for Example 31 to Example 33, CTAB was used as the surfactant.

In addition, in the same manner as in Example 1 above, the content of the surfactant and the content of the organic acid for the organic acid-treated surface-modified carbon nanotubes were calculated and are shown in Table 10 below.

In addition, in the same manner as in the Example 1, the G/D ratio, sheet resistance, absorbance, and the A value were measured and are shown in Table 11 below.

**[Table 10]**

| | Organic acid | Surfactant (mmol) | Organic acid (mmol) | Surfactant: Organic acid | Organic acid Content (wt%) | Surfactant content (wt%) |
|---|---|---|---|---|---|---|
| Example 24 | Citric acid | SDS1.7 | 10 | 1 : 6 | <0.2 | 2.66 |
| Example 25 | Citric acid | SDS1.7 | 50 | 1 : 29 | <0.2 | 2.73 |
| Example 26 | Citric acid | SDS1.7 | 100 | 1 : 59 | <0.2 | 2.68 |
| Example 27 | Acetic acid | SDS1.7 | 300 | 1 : 176 | 0.31 | 2.72 |
| Example 28 | Citric acid | SDS1.7 | 300 | 1 : 176 | 0.34 | 2.63 |
| Example 29 | Citric acid | SDS1.7 | 600 | 1 : 352 | 0.77 | 2.20 |
| Example 30 | Citric acid | SDS1.7 | 1,000 | 1 : 588 | 0.94 | 1.89 |
| Example 31 | Citric acid | CTAB1.7 | 300 | 1 : 176 | 1.27 | 1.74 |
| Example 32 | Citric acid | CTAB1.7 | 600 | 1 : 352 | 1.52 | 0.89 |
| Example 33 | Citric acid | CTAB1.7 | 1,000 | 1 : 588 | 1.88 | 0.72 |
| Example 34 | Citric acid | SDS1.7 | 1,200 | 1 : 706 | 1.18 | 1.65 |
| Example 35 | Citric acid | SDS1.7 | 1,500 | 1:882 | 1.32 | 1.34 |
| Example 36 | Suberic acid | SDS1.7 | 1,200 | 1 : 706 | 0.4 | 2.10 |
| Example 37 | Caproic acid | SDS3.5 | 1,000 | 1 : 286 | 1.32 | 2.45 |
| Example 38 | Suberic acid | SDS1.7 | 10 | 1:06 | <0.2 | 1.66 |
| Example 39 | Caproic acid | SDS1.7 | 300 | 1 : 176 | <0.2 | 2.42 |
| Example 40 | Suberic acid | SDS1.7 | 300 | 1 : 176 | <0.2 | 2.34 |

In Table 10 above, the content (wt%) of the organic acid and the content (wt%) of the surfactant are with respect to 100 wt% of the organic acid-treated surface-modified carbon nanotubes.

**[Table 11]**

| | Surfactant | G/D ratio | Sheet resistance (Ω/□) | Absorbance (@550nm) | A |
|---|---|---|---|---|---|
| Example 24 | SDS | 57.1 | 0.89 | 0.433 | 25.49 |
| Example 25 | SDS | 56.5 | 0.84 | 0.436 | 25.88 |
| Example 26 | SDS | 56.2 | 0.85 | 0.435 | 25.62 |
| Example 27 | SDS | 56.8 | 0.92 | 0.425 | 24.22 |
| Example 28 | SDS | 57.5 | 0.82 | 0.436 | 23.89 |
| Example 29 | SDS | 56.5 | 0.89 | 0.420 | 25.08 |
| Example 30 | SDS | 57.1 | 0.88 | 0.415 | 23.46 |
| Example 31 | CTAB | 56.2 | 0.85 | 0.433 | 19.55 |
| Example 32 | CTAB | 56.9 | 0.98 | 0.411 | 14.20 |
| Example 33 | CTAB | 57.8 | 0.99 | 0.406 | 14.01 |
| Example 34 | SDS | 57.5 | 0.90 | 0.402 | 20.92 |
| Example 35 | SDS | 58.6 | 0.93 | 0.400 | 19.86 |
| Example 36 | SDS | 56.4 | 0.94 | 0.400 | 16.21 |
| Example 37 | SDS | 55.8 | 0.84 | 0.451 | 29.34 |
| Example 38 | SDS | 57.0 | 0.98 | 0.408 | 19.66 |
| Example 39 | SDS | 55.4 | 0.96 | 0.412 | 23.25 |
| Example 40 | SDS | 56.9 | 0.94 | 0.418 | 24.61 |

With reference to Table 10 and Table 11 above, it was confirmed that Example 24 to Example 40 of the present invention are excellent in conductivity because a sheet resistance value is low. In addition, it was confirmed that Example 24 to Example 40 are excellent in dispersibility considering absorbance values for 550 nm.

### Comparative Example 12 to Comparative Example 13

As in Table 12 below, for Comparative Example 12 and Comparative Example 13, only the organic acid was used, and organic acid-treated CNT and CNT slurries were manufactured in the same manner as in Example 24 above except that the type and content of the organic acid were adjusted as in Table 12 below.

### Experimental Example

In the same manner as in Example 1 above, contents of the surfactant and the organic acid for the manufactured carbon nanotubes were calculated and are shown in Table 12 below.

In addition, in the same manner as in the Example 1, the G/D ratio, sheet resistance, absorbance, and the A value were measured and are shown in Table 13 below.

**[Table 12]**

| | Organic acid | Surfactant (mmol) | Organic acid (mmol) | Surfactant: Organic acid | Organic acid Content | Surfactant content (wt%) |
|---|---|---|---|---|---|---|
| Comparative Example 12 | Caproic acid | - | 10 | - | <0.2 | - |
| Comparative Example 13 | Suberic acid | - | 10 | - | <0.2 | - |

In Table 12 above, the content (wt%) of the organic acid and the content (wt%) of the surfactant are with respect to 100 wt% of the organic acid-treated surface-modified carbon nanotubes.

**[Table 13]**

| | G/D ratio | Sheet resistance (Ω/□) | Absorbance (@550nm) | A |
|---|---|---|---|---|
| Comparative Example 12 | 55.8 | 1.1 | 0.392 | 11.39 |
| Comparative Example 13 | 56.3 | 1.08 | 0.380 | 11.58 |

With reference to Table 12 and Table 13 above, it was confirmed that in cases of Comparative Example 12 and Comparative Example 13, conductivity is inferior because a sheet resistance value is large compared to Example 1 to Example 40 of the present invention described above.

With reference to the aforementioned experimental data, it can be seen that the surface-modified carbon nanotubes according to one embodiment of the present invention implement excellent conductivity and simultaneously implement improved dispersibility.

## Claims

1. Surface-modified carbon nanotubes, comprising:
carbon nanotubes; and
a surfactant adsorbed on surfaces of the carbon nanotubes, and
satisfying Equation 1 below during thermogravimetric analysis under a temperature condition of 30 °C or more and 900 °C or less: $14.0 % \leq A \leq 40.0 %$
in Equation 1 above, A is, with respect to peaks obtained by separating overlapped peaks of a thermal decomposition derivative curve of the surface-modified carbon nanotubes, a value representing a sum of areas of peaks included in a range of 400 °C or more and 600 °C or less as a percentage among a total area of peaks corresponding to the carbon nanotubes included in a range of 400 °C or more and 800 °C or less.

2. The surface-modified carbon nanotubes of claim 1, wherein the surfactant comprises at least one of an anionic surfactant and a cationic surfactant.

3. The surface-modified carbon nanotubes of claim 1, wherein a molecular weight of the surfactant is 200 g/mol or more and 500 g/mol or less.

4. The surface-modified carbon nanotubes of claim 1, wherein the surface-modified carbon nanotubes have a G/D ratio in a Raman spectrum of 20 or more and 60 or less, the G is a maximum peak intensity within a range of 1560 to 1600 cm⁻¹ in the Raman spectrum, and the D is a maximum peak intensity within a range of 1310 to 1360 cm⁻¹.

5. The surface-modified carbon nanotubes of claim 1, wherein the surface-modified carbon nanotubes comprise an oxidizing agent.

6. The surface-modified carbon nanotubes of claim 5, wherein the oxidizing agent comprises a potassium-based oxidizing agent having an ionization constant of -9 or more and 4 or less.

7. The surface-modified carbon nanotubes of claim 5, wherein the surface-modified carbon nanotubes comprising the oxidizing agent are a reaction product of a mixture comprising the carbon nanotubes, the surfactant, and the oxidizing agent, and the mixture has a molar ratio of the surfactant to the oxidizing agent of 1:5 to 1:200.

8. The surface-modified carbon nanotubes of claim 1, wherein the surface-modified carbon nanotubes comprise an organic acid containing one or more carboxyl groups.

9. The surface-modified carbon nanotubes of claim 8, wherein a carbon number of the organic acid is 1 or more and 7 or less.

10. The surface-modified carbon nanotubes of claim 8, wherein a content of the organic acid is 0.3 wt% or more and 1.3 wt% or less.

11. The surface-modified carbon nanotubes of claim 8, wherein the surface-modified carbon nanotubes comprising the organic acid are a reaction product of a mixture comprising the carbon nanotubes, the surfactant, and the organic acid, and the mixture has a molar ratio of the surfactant to the organic acid of 1:100 to 1:600.

12. Surface-modified carbon nanotubes, comprising:
carbon nanotubes; and
a surfactant bonded to surfaces of the carbon nanotubes,
wherein a content of the surfactant is 0.5 wt% or more and 4.0 wt% or less.

13. A dispersion comprising the surface-modified carbon nanotubes of claim 1 or claim 12.

14. The dispersion of claim 13, wherein a sheet resistance value is 0.5 Ω/□ or more and less than 1 Ω/□ when coated to a 10 µm thickness.

15. The dispersion of claim 13, wherein an absorbance for light of a 550 nm wavelength is 0.4 or more.

16. A secondary battery comprising an electrode comprising the surface-modified carbon nanotubes of claim 1 or claim 12.
